# EUROPEAN PATENT APPLICATION

(11) **EP 4 659 913 A1**
(43) Date of publication of application: **10.12.2025**
(21) Application number: 25180713.7
(22) Date of filing: 04.06.2025
(51) Int. Cl.: B25J 9/16

(54) **SYSTEMS AND METHODS FOR ALIGNMENT OF A ROBOTIC INTERFACE**

(30) Priority: 05.06.2024 US 202463656346 P
(71) Applicant: MacDonald, Dettwiler and Associates Inc., Brampton, Ontario L6Y 6K7 (CA)
(72) Inventor: Dickinson, Cameron, Brampton, Ontario, L6Y 6K7 (CA)
(74) Representative: Grünecker Patent- und Rechtsanwälte PartG mbB

(57) **Abstract**

Provided is a system and method for alignment of a robotic interface. The system includes an alignment device operable to connect to a robotic manipulator for moving the alignment device. The alignment device facilitates relative pose for positioning of the robotic manipulator with respect to an object. The alignment device includes a plurality of directional radio frequency identification (RFID) scanners. The object includes a target having a plurality of RFID tags including at least three RFID tags spaced in a triangular configuration to define a plane.

## Description

### Technical Field

The following relates generally to robotic interfaces, and more particularly to systems and methods for alignment of a robotic interface.

### Introduction

Conventional robotic systems may use camera systems to move a robotic manipulator or robotic arm relative to an object. However, these camera systems may be costly and complex to operate in a variety of settings including applications in outer space. Conventional systems may use a lot of power. Conventional systems may be impacted by lunar dust coverage.

Conventionally, radio frequency identification (RFID) is used to track or identify objects, such as by adding an RFID reader on a toolbox with tags on all the tools or allowing access to restricted areas.

Accordingly, there is a need for an improved system and method for a robotic interface that overcomes at least some of the disadvantages of existing systems and methods.

### Summary

Provided is a system for alignment of a robotic interface. The system includes an alignment device operable to connect to a robotic manipulator for moving the alignment device. The alignment device facilitates relative pose for positioning of the robotic manipulator with respect to an object, the alignment device includes a plurality of directional radio frequency identification (RFID) scanners. The system includes the object including a target having a plurality of RFID tags including at least three RFID tags spaced in a triangular configuration to define a plane.

The plurality of RFID tags may include a first outer tag and a second outer tag, and a first inner tag and a second inner tag that are positioned more proximal to a center axis of the target than the first outer tag and the second outer tag.

The first outer tag and the second outer tag may have opposite directional positions on the target.

The first inner tag may have the same directional position on the target as the first outer tag. The second inner tag may have the same directional position on the target as the second outer tag.

One or more of the at least three RFID tags may be on an angle relative to a surface of the target.

One or more of the at least three RFID tags may be parallel to the surface of the target.

The plurality of RFID scanners may read a return signal from the plurality of RFID tag to identify the plurality of RFID tag based on a unique returned RFID bit stream.

The alignment device may measure an intensity of the return signal from the plurality of RFID tag.

The plurality of RFID tag may include an inner set of RFID tags and an outer set of RFID tags. The inner set of RFID tags may be positioned closer to a center of the target than the outer set of RFID tags.

The plurality of RFID tag may be situated in a double radial pattern around the center of the target.

The inner set of RFID tags may be directionally tilted off a surface of the target. The outer set of RFID tags may be directed parallel to the surface of the target.

The relative angling of the inner set of RFID tags to the outer set of RFID tags may create a difference in returned signal intensity between the inner and outer set of RFID tags.

The plurality of RFID scanners may determine a pose position of the target based on a pattern of viewable RFID tags, and a relative signal strength across the plurality of RFID tags.

Provided is a method for aligning a robotic interface. The method includes detecting a pattern of at least three RFID tags on an object, the at least three RFID tags spaced in a triangular configuration to define a plane, measuring a relative signal strength of the RFID tags, and determining the pose position from the pattern of RFID tags and the relative signal strength of the RFID tags.

The method may further include positioning a robotic manipulator relative to the object, and aligning a robotic interface between the robotic manipulator and the object based on the pose position.

The RFID tags may include a first outer tag and a second outer tag, and a first inner tag and a second inner tag that are positioned more proximal to a center axis of a target on the object than the first outer tag and the second outer tag.

The first inner tag and the second inner tag may be on an angle relative to a surface of the target.

The first outer tag and the second outer tag may have opposite directional positions on the target.

The first inner tag may have the same directional position on the target as the first outer tag, and the second inner tag may have the same directional position on the target as the second outer tag.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a perspective view of a robotic system for alignment of a robotic interface, in accordance with an embodiment;
Figure 2 is a side view of the robotic system for alignment of a robotic interface of Figure 1;
Figure 3 is a top view of a target of the robotic interface, in accordance with an embodiment; and
Figure 4 is a flow chart of a method for alignment of a robotic interface, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to robotic interfaces, and more particularly to systems and methods for alignment of a robotic interface that use a plurality of radiofrequency identification (RFID) scanners and a plurality of RFID tags including at least three RFID tags arranged non-collinearly to define a plane.

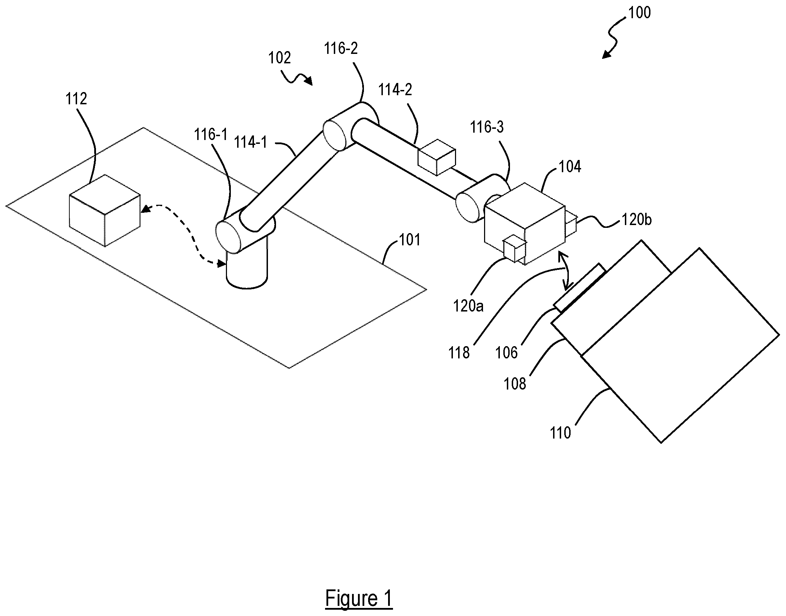

Referring to Figure 1 shown therein is a system 100 for alignment of a robotic interface, according to an exemplary embodiment. The system 100 is coupled to a platform 101. In a space-based application, the platform 101 may be a satellite or spacecraft bus, or vehicle platform (e.g., on a rover or the like).

The system 100 includes a robotic manipulator (e.g., robotic arm) 102. The system 100 includes an alignment device 104 operable to connect to the robotic manipulator 102 for moving the alignment device 104. The alignment device 104 is able to be coupled to a free end of the robotic manipulator 102. The robotic manipulator 102 manipulates, moves, and positions the alignment device 104. The alignment device 104 may be an end effector that can be picked up and removed by the robotic manipulator 102.

The alignment device 104 facilitates relative pose for the purposes of docking and/or grappling of the robotic manipulator 102 to an object 110. The alignment device 104 aligns with a target 106 on the object 108. The object 108 is mounted on a body 110, such as a spacecraft.

The object 108 may be, for example, a fixture that the robotic manipulator 102 will grapple to. The object 108 may be located at a location that is to be inspected. The object 102 may include any one or more of a tool, module, spacecraft or an orbital replacement unit.

In an embodiment, the system 100 includes a control device 112 executing control software for controlling movement of the robotic manipulator 102. The robotic manipulator 102 includes booms 114-1, 114-2 and joints 116-1, 116-2, and 116-3. Generally, the control device 112 controls movement (e.g., rotation) of the joints 116-1, 116-2, and 116-3, thereby enabling controlled movement of the robotic manipulator 102 and ultimately of the alignment device 104. The manipulator 102 and control device 112 are communicatively connected and the connection is represented as a dashed line between the manipulator 102 and control device 112.

The alignment device 104 includes a power system for providing power to the alignment device 104. The alignment device 104 can advantageously be managed by a robotic system (e.g., 102). The alignment device 104 may be manipulated and managed manually (e.g., by an astronaut). The alignment device 104 includes a control unit for controlling the alignment device 104. The alignment device 104 receives power from the robotic manipulator 102. The alignment device 104 receives instructions from the control device 112.

The alignment device 104 aligns a robotic interface 118 between the robotic manipulator 102 with the object 108.

The alignment device 104 includes a plurality of directional radio frequency identification (RFID) scanners 120a, 120b.

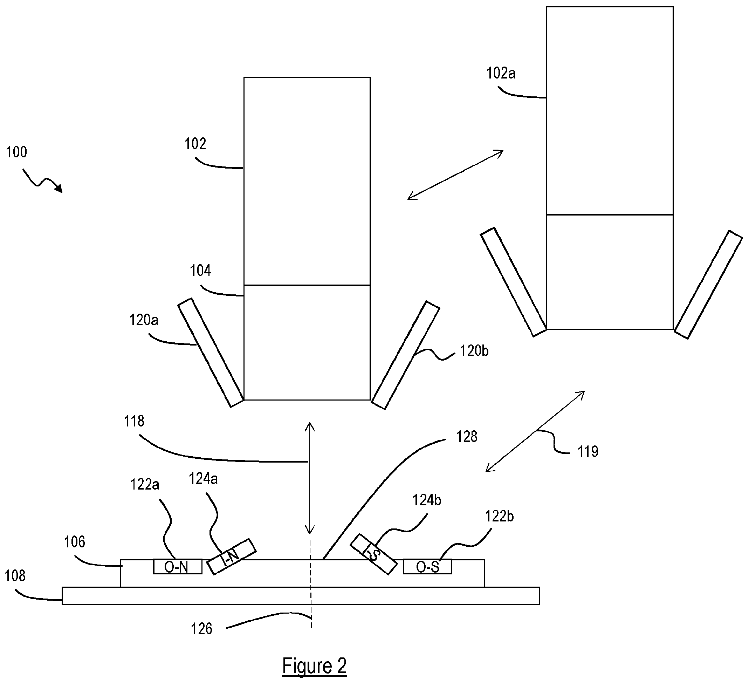

Referring now to Figure 2, illustrated therein is a detailed view of an exemplary embodiment of the robotic interface 118 of the system 100 of Figure 1.

The robotic manipulator 102 moves along a path such as example path 119 from a first position (such as first position 102a of the robotic manipulator), to a second position more proximal to the target 106 based on the pose determined by the alignment system 104.

The alignment device 104 includes two (or more) directional radio frequency identification (RFID) scanners 120a, 120b. The RFID scanners 120a, 120b may be affixed to the sides of the alignment device 104. The RFID scanners 120a, 120b are positioned at an angle relative to the axis of the robotic manipulator 102.

The target 106 includes RFID tags 122a, 122b, 124a, 124b. The RFID tags 122a, 122b, 124a, 124b include an antenna and a chip. The antennas on the RFID tags 122a, 122b, 124a, 124b transmit responding signals to the RFID scanners 120a, 120b that are modulated to make the responding signals unique.

The RFID tags 122a, 122b, 124a, 124b may be passive RFID tags that are not powered and instead work by using electromagnetic energy transmitted from the RFID scanners 120a, 120b.

The RFID tags 122a, 122b, 124a, 124b may be powered or active RFID tags that contain a power supply (e.g., battery).

The RFID scanners 120a, 120b emit pulses, which are received by the RFID tags 122a, 122b, 124a, 124b, modulated and pulsed back to the RFID scanners 120a, 120b. The modulated pulses sent by each RFID tag 122a, 122b, 124a, 124b may include a unique identifier (ID) for the tag that is responded, for example, encoded in a series of bits. The RFID tags 122a, 122b, 124a, 124b have unique identifiers, allowing the system 100 to determine which of the RFID tags 122a, 122b, 124a, 124b the RFID scanner 120a, 120b is receiving the signal from.

The RFID scanners 120a, 120b receive the modulated pulses from the RFID tags 122a, 122b, 124a, 124b, receiving both the pulsed data (the ID) and signal intensity/strength (based on the distance of the tag from the scanner). The RFID scanners 120a, 120b parse and differentiate the RFID tags 122a, 122b, 124a, 124b. Using the ID and signal intensity of each responding RFID tag 122a, 122b, 124a, 124b, the alignment system 104 then makes a determination of the relative pose of the robotic manipulator 102 in relation to the target 106.

Depending on the position (e.g., position of the robotic manipulator 102a) of the robotic manipulator 102, the RFID scanners 120a, 120b may not receive responses from one or more of the RFID tags 122a, 122b, 124a, 124b because the one or more of the RFID tags 122a, 122b, 124a, 124b or the target 106 is out of range. This lack of response can also help determine pose since the system 100 will recognize which RFID tags 122a, 122b, 124a, 124b are missing and can correct. The robotic manipulator 102 may then move along a path (e.g., path 119) to be more proximal to the target 106 where a second determination of pose is performed.

The system 100 provides the use of RFID scanners and tags for pose estimation/alignment. At a minimum, the system 100 has three (3) RFID tags spaced in a triangular configuration such that they define a plane (e.g., at least three non-collinear RFID tags), allowing the system to triangulate the position. The system 100 provides the use of multiple tags to triangulate the position of the robotic manipulator in relation to the tags.

Adding more RFID tags improves precision via noise reduction through increased sampling. At a minimum the system 100 has one RFID scanner. Adding more RFID scanners improves the area coverage over which the system 100 can receive a signal and thereby precision.

The system 100 provides the use of multiple tags to improve the precision of the pose estimation. The more tags the system 100 has the more precise of a pose determination the system 100 can make as the system 100 can better overcome noise effects from the data output.

The RFID scanners 120a, 120b read electromagnetic radiation that is emitted from the RFID tags 122a, 122b, 124a, 124b.

There may be a series of paired RFID scanners 120a, 120b. Readers within each pair are orthogonal to each other to provide orientation information. The number of pairs may be determined by the accuracy that is desired. The number of pairs may also be determined by the total number of RFID tags 122a, 122b, 124a, 124b and their placement.

While the power may be continuous to the robotic manipulator 102, the power may or may not be on the object 108. In a variant where there is power to the object 108, the RFID scanners 120a, 120b may be on the object 108, while the RFID tags 122a, 122b, 124a, 124b are on the robotic manipulator 102.

The method for reading the RFID tags 122a, 122b, 124a, 124b uses intensity to determine the position of the robotic manipulator 102 to the object 108.

In an exemplary embodiment, the target 106 includes a first outer (O) tag 122a and a second outer (O) tag 122b that are positioned distally from a center axis 126 of the target 106. The first outer tag 122a and the second outer tag 122b are parallel to a surface of the target 106. The first outer tag 122a and the second outer tag 122b have opposite directional positions on the target 106 (e.g., opposite cardinal positions relative to center axis 126). For example, the first outer tag 122a has a north (N) directional position and the second outer tag 122b has a south (S) directional position, and are denoted as O-N, O-S, respectively. In some cases, the first outer tag 122a and the second outer tag 122b may be spaced an equal distance from the center axis 126. In some cases, the first outer tag 122a and the second outer tag 122b may be spaced an equal distance from the center axis 126 and lie on a second axis (not shown) that is perpendicular to the center axis 126.

Having the RFID tags 122a, 122b, 124a, 124b angled relative to each other may add more data to increase the number of measurements offer alternative signal intensities, and better determine accurate readings and reduce noise prevalence.

The target 106 includes a first inner (I) tag 124a and a second inner (I) tag 124b that are positioned more proximal to the center axis 126 than the first outer tag 122a and the second outer tag 122b. The first inner tag 124a and the second inner tag 124b have opposite directional positions on the target 106 (e.g., opposite cardinal positions relative to center axis 126). The first inner tag 124a has the same directional position on the target 106 as the first outer tag 122a. The second inner tag 124b has the same directional position on the target 106 as the second outer tag 122b. For example, the first inner tag 124a has a north (N) directional position and the second inner tag 124b has a south (S) directional position, and are denoted as I-N, I-S, respectively. In some cases, the first inner tag 124a and the second inner tag 124b may be spaced an equal distance from the center axis 126. In some cases, the first inner tag 124a and the second inner tag 124b may be spaced an equal distance from the center axis 126 and lie on a second axis that is perpendicular to the center axis 126.

The first inner tag 124a and the second inner tag 124b are on an angle relative to a surface 128 of the target 106. The first inner tag 124a and the second inner tag 124b may be on an outward angle relative to a surface 128 of the target 106, so that the RFID scanners 120a, 120b located on the opposite side will read the first inner antenna 124a (or the second inner antenna 124b) with little or no intensity.

The first inner tag 124a and the second inner tag 124b are angled away from each other. The angle of the first inner tag 124a and the second inner tag 124b provides directionality to the RFID scanners 120a, 120b. The angle may be dependent on the geometry of the object 108 and the robotic manipulator 102 as well as the desired accuracy. The angle of the inner ring may be 0-90 degrees, relative to the surface 128 of the object 108. The tags 124a, 124b, at an angle may improve precision by generating different types of responding pulses with different signal strengths. The tags 124a, 124b, at an angle may improve the ability to overcome noise effects and accurately determine pose.

The RFID scanners 120a, 120b read the return signal from the RFID tags 122a, 122b, 124a, 124b. The RFID scanners 120a, 120b identify each individual RFID tag 122a, 122b, 124a, 124b based on the unique returned RFID bit stream. The alignment device 104 measures the intensity of the return signal from each RFID tag 122a, 122b, 124a, 124b.

The RFID tags 122a, 122b, 124a, 124b are directional and the angle relative to the axial axis 126 of the robotic manipulator 102 is such that RFID tags 122a, 122b, 124a, 124b embedded within the target 106 will return a different intensity based on the directional position on the target and whether the RFID tag is angled. The inner (I) and outer (O) set of RFID tags are angled differently relative to the target normal / robotic manipulator long axis.

Advantageously, the system 100 may replace (or augment) a camera system or a machine vision camera system with visual targets by using the RFID tags 122a, 122b, 124a, 124b and RFID scanners 120a, 120b. The RFID tags 122a, 122b, 124a, 124b and the RFID scanners 120a, 120b may be two orders of magnitude (approximately) less complex and expensive than a camera system.

The RFID scanners 120a, 120b may be a simultaneous RFID reader. The RFID scanners 120a, 120b may be connected to compatible electronics board, or a microcontroller. The RFID scanners 120a, 120b may be connected to a computer such as the controller 112. The RFID scanners 120a, 120b may read RFID tags, for example, at up to 150 tags per second. The RFID scanners 120a, 120b may write RFID tags, for example, at a 80msec standard write. The RFID scanners 120a, 120b may have an adjustable power output (e.g., from 0dBm to 27dBm), meaning that with the appropriate antenna, the RFID scanners 120a, 120b read at a distance (e.g., up to 16 feet (4.9m), or 1 to 2 feet) from the RFID antenna.

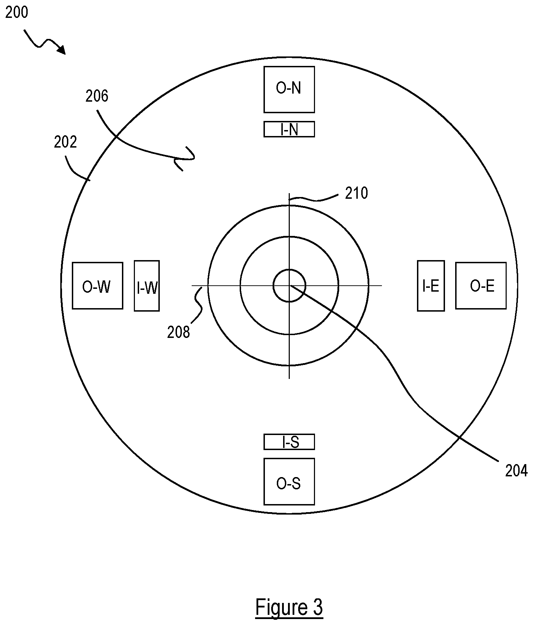

Turning now to Figure 3, illustrated therein is a target system 200, in accordance with an embodiment. The target system 200 includes a target 202. For example, the target 202 may be the target 106 of Figure 1.

The target 202 includes a center marker 204 for indicating the center of the target 202. The target 202 has a generally planar surface 206.

The target 202 includes a plurality of RFID tags that are read by RFID scanners (e.g., 120a, 120b of Figure 1). The plurality of RFID tags include: an outer north tag (O-N), an inner north tag (I-N), an outer east tag (O-E), an inner east tag (I-E), an outer south tag (O-S), an inner south tag (I-S), an outer west tag (O-W), and an inner west tag (I-W). The use of cardinal positions north, south, east, and west is to facilitate identification of individual tags within this embodiment in order to differentiate between tags located radially at 90 degree intervals.

The plurality of RFID tags includes an inner set (I) of RFID tags and an outer (O) set of RFID tags. The inner set (I) of RFID tags are positioned closer to the center 204 of the target 202 than the outer (O) set of RFID tags. The plurality of RFID tags are situated in a double radial pattern around the center 204 of the target 202. It will be understood that RFID tag pairs O-N and O-S are considered to have opposite directional positions on the target 202. Similarly, RFID tag pairs I-N and I-S, O-W and O-E, and I-W and I-E are each also considered to have opposite directional positions on the target 202. For example, RFID tags O-N and O-S are on opposite sides of first axis 208 (one above, one below) and thus considered to have opposite directional positions. Likewise, RFID tags O-W and O-S are on opposite sides of second axis 210 (one to the left, one to the right). Tags with opposite directional positions may be positioned at an equal distance from their respective axis and may both lie on an axis perpendicular to their respective axis. For example, RFID tags O-N and O-S are positioned at an equal distance from the first axis 208 and both lie on second axis 210.

The inner set (I) of RFID tags are directionally tilted off the surface 206 of the target 204. The outer (O) set of RFID tags are directed normal to the surface 206 of the target 204. The relative angling of the inner set (I) of RFID tags to the outer (O) set of RFID tags creates a difference in returned signal intensity between the inner (I) and outer (O) set of RFID tags.

The RFID scanners (e.g., 120a, 120b) determine the pose position of the target 202 relative to the robotic manipulator 102 based on the pattern of viewable RFID tags, and the relative signal strength across the plurality of RFID tags.

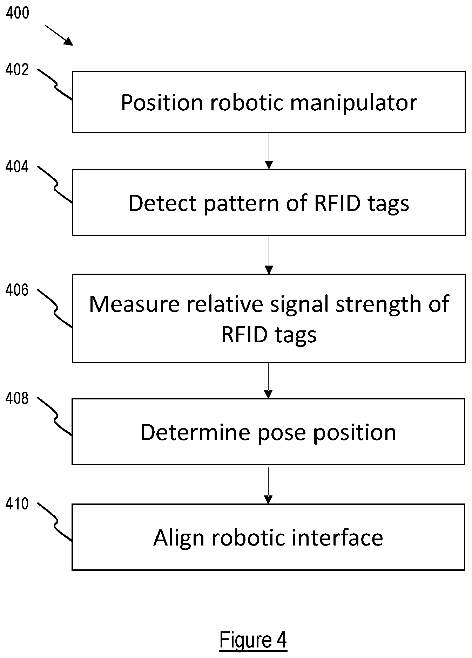

Referring to Figure 4, described therein is a method 400 for aligning a robotic interface, in accordance with an embodiment. The method 400 may be performed with the system 100 of Figures 1 and 2 and/or the target of Figure 3.

At 402, a robotic manipulator is positioned relative to an object.

At 404, a pattern of RFID tags on the object is detected with a plurality of RFID readers.

At 406, a relative signal strength of the RFID tags are measured.

At 408, the pose position is determined from the pattern of RFID tags and the relative signal strength of the RFID tags.

At 410, the robotic interface is aligned between the robotic manipulator and the object based on the pose position (e.g., the robotic manipulator moves from position 102a to position 102 shown in Figure 2).

The performance of the method 400 may be based on any one or more of the geometry, the number of readers, the number of tags (both outer and inner), and the angle of inner tags.

While the above description provides examples of one or more apparatus, methods, or systems, it will be appreciated that other apparatus, methods, or systems may be within the scope of the claims as interpreted by one of skill in the art.

## Claims

1. A system for alignment of a robotic interface, the system comprising:
an alignment device operable to connect to a robotic manipulator for moving the alignment device;
the alignment device facilitates relative pose for positioning of the robotic manipulator with respect to an object, the alignment device includes a plurality of directional radio frequency identification (RFID) scanners;
the object including a target having a plurality of RFID tags including at least three RFID tags spaced in a triangular configuration to define a plane.

2. The system of claim 1, wherein the plurality of RFID tags include:
a first outer tag and a second outer tag; and
a first inner tag and a second inner tag that are positioned more proximal to a center axis of the target than the first outer tag and the second outer tag.

3. The system of claim 2, wherein the first outer tag and the second outer tag have opposite directional positions on the target.

4. The system of claim 3, wherein the first inner tag has the same directional position on the target as the first outer tag, and wherein the second inner tag has the same directional position on the target as the second outer tag.

5. The system of claim 1, wherein one or more of the at least three RFID tags are on an angle relative to a surface of the target.

6. The system of claim 5, wherein one or more of the at least three RFID tags are parallel to the surface of the target.

7. The system of claim 1,
wherein the plurality of RFID scanners read a return signal from the plurality of RFID tags to identify the plurality of RFID tags based on a unique returned RFID bit stream; and/or
wherein the alignment device measures an intensity of the return signal from the plurality of RFID tags.

8. The system of claim 1, wherein the plurality of RFID tags include an inner set of RFID tags and an outer set of RFID tags, wherein the inner set of RFID tags are positioned closer to a center of the target than the outer set of RFID tags.

9. The system of claim 8, wherein the plurality of RFID tags are situated in a double radial pattern around the center of the target.

10. The system of claim 8, wherein the inner set of RFID tags are directionally tilted off a surface of the target, and wherein the outer set of RFID tags are directed parallel to the surface of the target.

11. The system of claim 10, wherein the relative angling of the inner set of RFID tags to the outer set of RFID tags creates a difference in returned signal intensity between the inner and outer set of RFID tags.

12. The system of claim 11, wherein the plurality of RFID scanners determine a pose position of the target based on a pattern of viewable RFID tags, and a relative signal strength across the plurality of RFID tags.

13. A method for aligning a robotic interface, the method includes:
detecting a pattern of at least three RFID tags on an object, the at least three RFID tags spaced in a triangular configuration to define a plane;
measuring a relative signal strength of the RFID tags; and
determining the pose position from the pattern of RFID tags and the relative signal strength of the RFID tags.

14. The method of claim 13 further comprising:
positioning a robotic manipulator relative to the object; and
aligning a robotic interface between the robotic manipulator and the object based on the pose position.

15. The method of claim 13 wherein the RFID tags include:
a first outer tag and a second outer tag; and
a first inner tag and a second inner tag that are positioned more proximal to a center axis of a target on the object than the first outer tag and the second outer tag.
